# EUROPEAN PATENT APPLICATION

(11) **EP 4 726 861 A1**
(43) Date of publication of application: **15.04.2026**
(21) Application number: 23940970.9
(22) Date of filing: 12.06.2023
(51) Int. Cl.: H01M 10/6557, H01M 50/102

(54) **BATTERY AND ELECTRIC DEVICE**

(71) Applicant: Ningde Amperex Technology Limited, Ningde, Fujian 352100 (CN)
(72) Inventor: YAO, Wenlei, Ningde, Fujian 352100 (CN); CHEN, Tengteng, Ningde, Fujian 352100 (CN); DENG, Daolin, Ningde, Fujian 352100 (CN); LIU, Ying, Ningde, Fujian 352100 (CN)
(74) Representative: Kraus & Lederer PartGmbB
(86) International application number: PCT/CN2023/099622
(87) International publication number: WO 2024/254731

(57) **Abstract**

A battery and an electric device are provided. The battery includes an electrode assembly, a housing, and a terminal post, where the electrode assembly is accommodated in the housing. The housing includes a first wall and a second wall disposed opposite each other along a first direction and includes a peripheral side wall surrounding the first wall and the second wall and disposed therebetween. The first direction is a thickness direction of the battery. The first wall includes a reinforcement portion, where the reinforcement portion protrudes beyond the peripheral side wall. The peripheral side wall includes a top wall and a bottom wall disposed opposite each other along a second direction, where the top wall is provided with a through-hole, and the terminal post is disposed at the through-hole. In the above battery, the reinforcement portion protrudes beyond the peripheral side wall. During battery swelling, the reinforcement portion can suppress formation of creases at an edge of the first wall, reduce pulling on the peripheral side wall, and provide support to the peripheral side wall, enhancing structural strength of the peripheral side wall, improving resistance of the peripheral side wall to tensile deformation, thereby reducing a risk of collapse of the peripheral side wall and improving safety performance of the battery.

## Description

### TECHNICAL FIELD

This application relates to the field of energy storage technology, and in particular, to a battery and an electric device.

### BACKGROUND

With the widespread use of portable electronic devices, the safety requirements for batteries therein are increasingly stringent. Hard-shell batteries (such as steel-shell batteries) are widely used due to their advantages such as superior safety performance and manufacturing convenience.

### SUMMARY

However, the inventors of this application have found that when a hard-shell battery swells due to abnormal gas production, a bulging main wall pulls the side wall, causing creases and collapse in the side wall. A collapsed portion is prone to compressing the electrode plates, leading to a short circuit and affecting the safety of the battery.

**In** view of the above situation, it is necessary to provide a battery with improved safety performance.

According to a first aspect of this application, a battery is provided, including an electrode assembly, a housing, and a terminal post, where the electrode assembly is accommodated in the housing; the housing includes a first wall and a second wall disposed opposite each other along a first direction and includes a peripheral side wall surrounding the first wall and the second wall and disposed therebetween, and the first direction is a thickness direction of the battery; and the first wall includes a reinforcement portion, where the reinforcement portion protrudes beyond the peripheral side wall. The peripheral side wall includes a top wall and a bottom wall disposed opposite each other along a second direction, where the top wall is provided with a through-hole, and the terminal post is disposed at the through-hole.

In the above solution, the reinforcement portion protrudes beyond the peripheral side wall. During battery swelling, the reinforcement portion can suppress the formation of creases at an edge of the first wall, reduce pulling on the peripheral side wall, and provide support to the peripheral side wall, enhancing the structural strength of the peripheral side wall, improving resistance of the peripheral side wall to tensile deformation, thereby reducing a risk of collapse of the peripheral side wall and improving safety performance of the battery.

In some embodiments, the first wall and the peripheral side wall are connected by welding to enhance connection strength between the first wall and the peripheral side wall.

In some embodiments, the housing contains a metal element, where the metal element includes at least one of Mg, Al, Zn, Fe, Sn, Cu, Ag, Pt, Au, or Mn, to enhance structural strength of the housing and provide the housing with electrical conductivity.

In some embodiments, the peripheral side wall includes a side wall body and a flange, where the flange is disposed at an end of the peripheral side wall adjacent to the first wall, a side surface of the flange is connected to the first wall, and the reinforcement portion protrudes beyond a side of the flange away from the side wall body. This can enhance the structural strength of the peripheral side wall and improve the resistance of the peripheral side wall to tensile deformation.

In some embodiments, the reinforcement portion is bent toward the peripheral side wall to reduce space wastage caused by the reinforcement portion protruding beyond the peripheral side wall, thereby increasing the energy density of the battery, while further enhancing the structural strength of the peripheral side wall and improving the resistance of the peripheral side wall to tensile deformation.

In some embodiments, the first wall includes a main body portion, where the main body portion is connected to the peripheral side wall, and the main body portion and the reinforcement portion are integrally formed to simplify a manufacturing process of the reinforcement portion, while further enhancing the structural strength of the first wall, suppressing the formation of creases at the edge of the first wall during battery swelling, and reducing pulling on the peripheral side wall.

In some embodiments, the peripheral side wall further includes a first side wall and a second side wall disposed opposite each other along a third direction; the first direction, the second direction, and the third direction are perpendicular to each other; and the reinforcement portion protrudes beyond at least one in a group consisting of the top wall, the bottom wall, the first side wall, and the second side wall.

In some embodiments, a length of the top wall or the bottom wall in the third direction is greater than a length of the first side wall or the second side wall in the second direction, and the reinforcement portion protrudes beyond the top wall or the bottom wall. During battery swelling, the side of the main body portion connected to the top wall or the bottom wall is more prone to stress concentration, leading to bending. The reinforcement portion protrudes beyond the top wall or the bottom wall, allowing the reinforcement portion to be connected to a longer side of the main body portion, corresponding to a stress concentration area of the main body portion. This further reduces the risk that creases form at the edge of the first wall and cause collapse of the corresponding top wall or bottom wall, thereby improving the safety performance of the battery.

In some embodiments, the electrode assembly is a wound structure, a winding axis direction of the wound structure is the same as the second direction, and the reinforcement portion protrudes beyond the top wall or the bottom wall. When battery swelling causes collapse of the peripheral side wall, a collapsed portion presses against a winding end surface of the wound structure, which is likely to cause a short circuit between a positive electrode and a negative electrode. The reinforcement portion protruding beyond the top wall or the bottom wall can reduce the risk that creases form at the edge of the first wall and causes collapse of the corresponding top wall or bottom wall, which leads to compression of the winding end surface and a short circuit between the positive electrode and negative electrode. This can improve the safety performance of the battery.

In some embodiments, the reinforcement portion includes a plurality of segments spaced apart along the second direction or the third direction to distribute force on the reinforcement portion, enhancing the collapse suppression effect.

In some embodiments, the battery further includes a circuit board assembly, where the circuit board assembly is located on a side of the top wall. The top wall and the circuit board assembly may be connected and fixed by an adhesive member, with the top wall having higher structural strength than the bottom wall due to the support of the circuit board assembly. During battery swelling, the side of the main body portion connected to the bottom wall is prone to pulling the bottom wall, causing deformation. This makes the side of the main body portion connected to the bottom wall more susceptible to stress concentration, leading to bending. The reinforcement portion protruding beyond the bottom wall can reduce the risk that creases form at the edge of the first wall and cause collapse of the bottom wall, thereby improving the safety performance of the battery.

In some embodiments, the reinforcement portion protrudes beyond the top wall or the bottom wall, and along the third direction, a length I1 of the reinforcement portion and a length L1 of the top wall or the bottom wall satisfy: I1 ≥ 10%L1. The length I1 of the reinforcement portion is a length of the side of the reinforcement portion connected to the main body portion. For example, the reinforcement portion protrudes beyond the bottom wall, and the length L1 of the bottom wall is a length of the side of the main body portion connected to the bottom wall. With I1 greater than or equal to 10%L1, during battery swelling, the reinforcement portion can better suppress the formation of creases at the edge of the first wall, reduce pulling on the bottom wall, and better support the bottom wall, enhancing the structural strength of the bottom wall, improving the resistance of the bottom wall to tensile deformation, thereby reducing the risk of collapse of the bottom wall and improving the safety performance of the battery. When the reinforcement portion protrudes beyond the top wall, the range is also satisfied.

In some embodiments, the reinforcement portion protrudes beyond the first side wall or the second side wall, and along the second direction, a length I2 of the reinforcement portion and a length L2 of the first side wall or the second side wall satisfy: I2 ≥ 10%L2. The length I2 of the reinforcement portion is a length of a side of the reinforcement portion connected to the main body portion. For example, the reinforcement portion protrudes beyond the second side wall. The length L2 of the second side wall is a length of a side of the main body portion connected to the second side wall. With I2 greater than or equal to 10%L2, during battery swelling, the reinforcement portion can better suppress the formation of creases at the edge of the first wall, reduce pulling on the second side wall, and better support the second side wall, enhancing the structural strength of the second side wall, improving resistance of the second side wall to tensile deformation, thereby reducing the risk of collapse of the second side wall and improving the safety performance of the battery. When the reinforcement portion protrudes beyond the first side wall, the range is also satisfied.

In some embodiments, along a protrusion direction of the reinforcement portion, a protrusion width W1 of the reinforcement portion satisfies: W1 ≥ 0.1 mm. With W1 greater than or equal to 0.1 mm, the structural strength of the reinforcement portion can be enhanced, better suppressing the collapse of the peripheral side wall. It should be noted that when a shape of the reinforcement portion is trapezoidal, semicircular, triangular, or the like, a portion satisfying the above range is an effective portion of the reinforcement portion.

In some embodiments, the reinforcement portion protrudes beyond the top wall or the bottom wall; and along the third direction, a distance m1 between an end of the reinforcement portion close to the first side wall and the first side wall and a distance m2 between an end of the reinforcement portion close to the second side wall and the second side wall satisfy: 0 ≤ m1 ≤ 43%L1, and 0 ≤ m2 ≤ 43%L1. For example, the reinforcement portion protrudes beyond the bottom wall. A center of the side of the main body portion of the first wall connected to the bottom wall is prone to creases, making a center of the bottom wall also prone to collapse. With m1 and m2 satisfying 0 ≤ m1 ≤ 43%L1 and 0 ≤ m2 ≤ 43%L1, the reinforcement portion can strengthen the center of the connection between the side of the main body portion of the first wall and the bottom wall, which is prone to creases, thereby better suppressing the formation of creases at the edge of the first wall and the collapse of the bottom wall, improving the safety performance of the battery. When the reinforcement portion protrudes beyond the top wall, the ranges are also satisfied.

In some embodiments, the reinforcement portion protrudes beyond the first side wall or the second side wall; and along the second direction, a length L2 of the second side wall, a distance m3 between an end of the reinforcement portion facing the top wall and the top wall, and a distance m4 between an end of the reinforcement portion facing the bottom wall and the bottom wall satisfy: 0 ≤ m3 ≤ 43%L2, and 0 ≤ m4 ≤ 43%L2. For example, the reinforcement portion protrudes beyond the second side wall. With m3 and m4 satisfying 0 ≤ m3 ≤ 43%L2 and 0 ≤ m4 ≤ 43%L2, the reinforcement portion can strengthen the center of the connection between the main body portion of the first wall and the second side wall, which is prone to creases, thereby better suppressing the formation of creases at the edge of the first wall and the collapse of the second side wall, improving the safety performance of the battery. When the reinforcement portion protrudes beyond the first side wall, the ranges are also satisfied.

According to a second aspect of this application, an electric device is further provided, including the battery according to any one of the above embodiments. Thus, the electric device of this application has good safety performance.

### BRIEF DESCRIPTION OF DRAWINGS

FIG. 1 is a schematic structural diagram of a battery according to an embodiment of this application.
FIG. 2 is a schematic structural exploded view of a battery according to an embodiment of this application.
FIG. 3 is a schematic structural diagram of a bent reinforcement portion according to an embodiment of this application.
FIG. 4 is a schematic structural diagram of a battery according to another embodiment of this application.
FIG. 5 is a schematic structural diagram of a segment according to an embodiment of this application.
FIG. 6 is a schematic diagram of a position of a circuit board assembly according to an embodiment of this application.
FIG. 7 is a first schematic dimensional structural diagram of a battery according to an embodiment of this application.
FIG. 8 is a second schematic dimensional structural diagram of a battery according to an embodiment of this application.
FIG. 9 is a third schematic dimensional structural diagram of a battery according to an embodiment of this application.
FIG. 10 is a schematic structural diagram of an electric device according to an embodiment of this application.

### Description of reference signs:

battery 100; electric device 200; electrode assembly 10; top end surface 11; bottom end surface 12; straight section 13; curved section 14; housing 20; first wall 21; reinforcement portion 211; first side 211a; second side 211b; third side 211c; first portion 211d; second portion 211e; main body portion 212; second wall 22; peripheral side wall 23; side wall body 23a; flange 23b; top wall 231; through-hole 2311; bottom wall 232; first side wall 233; second side wall 234; terminal post 30; circuit board assembly 40; first direction Z; second direction X; and third direction Y.

The following specific embodiments further illustrate this application with reference to the above drawings.

### DETAILED DESCRIPTION

The technical solutions in some embodiments of this application are described below with reference to the drawings in these embodiments of this application. It is clear that the described embodiments are only some but not all embodiments of this application.

It should be noted that when an element is referred to as being "connected" to another element, it may be connected to the another element directly or through an intervening element. When an element is referred to as being "disposed on" another element, it may be disposed on the another element directly or through an intervening element.

Unless otherwise defined, all technical and scientific terms used herein have the same meaning as commonly understood by those skilled in the art of this application. The terms used in the specification of this application are for the purpose of describing specific embodiments only and are not intended to limit this application. The term "and/or" as used herein includes any and all combinations of one or more related listed items.

The inventors of this application have found that when a hard-shell battery swells due to abnormal gas production, a bulging main wall pulls the side wall, causing creases and collapse in the side wall. A collapsed portion is prone to compressing the electrode plates, leading to a short circuit and affecting the safety of the battery.

According to a first aspect of this application, a battery is provided, including an electrode assembly, a housing, and a terminal post, where the electrode assembly is accommodated in the housing. The housing includes a first wall and a second wall disposed opposite each other along a first direction and includes a peripheral side wall surrounding the first wall and the second wall and disposed therebetween, and the first direction is a thickness direction of the battery. The first wall includes a reinforcement portion, where the reinforcement portion protrudes beyond the peripheral side wall. The peripheral side wall includes a top wall and a bottom wall disposed opposite each other along a second direction, where the top wall is provided with a through-hole, and the terminal post is disposed at the through-hole.

In the above solution, the reinforcement portion protrudes beyond the peripheral side wall. During battery swelling, the reinforcement portion can suppress the formation of creases at an edge of the first wall, reduce pulling on the peripheral side wall, and provide support to the peripheral side wall, enhancing the structural strength of the peripheral side wall, improving resistance of the peripheral side wall to tensile deformation, thereby reducing the risk of collapse of the peripheral side wall and improving the safety performance of the battery. Some embodiments of this application are further described below with reference to the drawings.

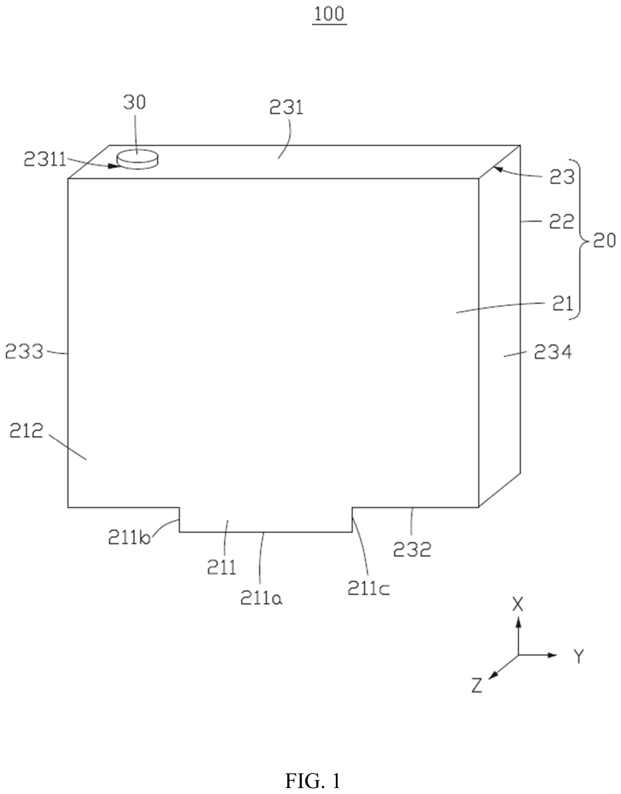

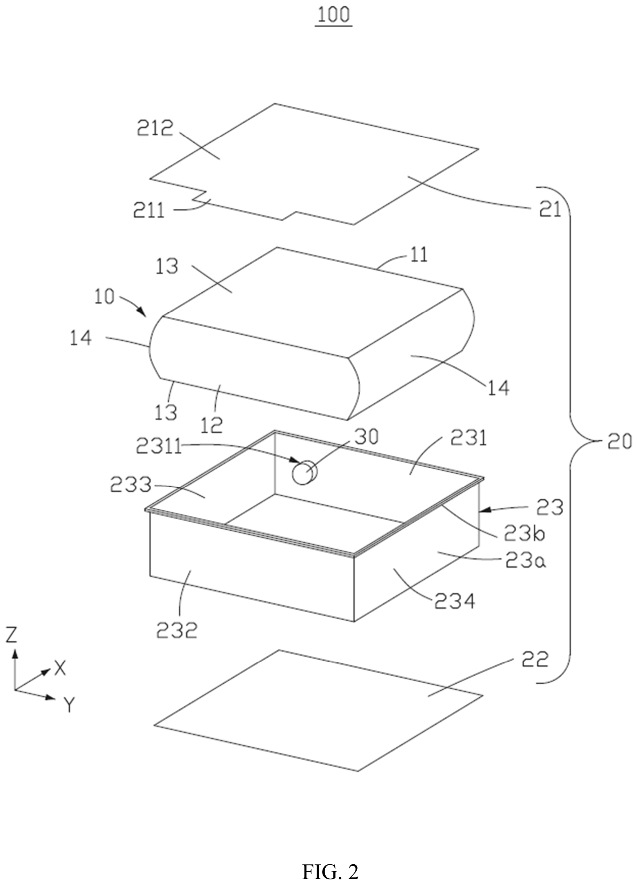

Refer to FIG. 1 and FIG. 2. An embodiment of this application provides a battery 100, including an electrode assembly 10, a housing 20, and a terminal post 30. The electrode assembly 10 is accommodated in the housing 20, where the electrode assembly 10 is configured to convert chemical energy into electrical energy. Optionally, the electrode assembly 10 is a wound structure or a stacked structure.

The housing 20 is made of a metal material to enhance the structural strength of the housing 20 and provide the housing 20 with electrical conductivity. Optionally, the housing 20 contains a metal element, where the metal element includes at least one of Mg, Al, Zn, Fe, Sn, Cu, Ag, Pt, Au, or Mn.

A thickness direction of the battery 100 is defined as a first direction Z. The housing 20 includes a first wall 21 and a second wall 22 disposed opposite each other along the first direction Z, and a peripheral side wall 23 surrounding the first wall 21 and the second wall 22 and disposed therebetween. A sealed space accommodating the electrode assembly 10 is formed between the first wall 21, the second wall 22, and the peripheral side wall 23. Optionally, the first wall 21 and the peripheral side wall 23 are connected by welding to enhance the connection strength between the first wall 21 and the peripheral side wall 23.

The first wall 21 includes a reinforcement portion 211, where the reinforcement portion 211 protrudes beyond the peripheral side wall 23. During battery swelling, the reinforcement portion 211 can suppress the formation of creases at an edge of the first wall 21, reduce pulling on the peripheral side wall 23, and provide support to the peripheral side wall 23, enhancing the structural strength of the peripheral side wall 23, improving the resistance of the peripheral side wall 23 to tensile deformation, thereby reducing the risk of collapse of the peripheral side wall 23 and improving the safety performance of the battery 100.

It can be understood that the second wall 22 has a structure similar to the first wall 21 and may also include a corresponding reinforcement portion to enhance the structural strength of the peripheral side wall 23 and improve resistance of the peripheral side wall 23 to tensile deformation. The following embodiments are described with the first wall 21 including the reinforcement portion 211 and the second wall 22 not including a reinforcement portion.

Refer to FIG. 1 and FIG. 2. The peripheral side wall 23 includes a top wall 231 and a bottom wall 232 disposed opposite each other along a second direction X, where the second direction X is perpendicular to the first direction Z. The top wall 231 is provided with a through-hole 2311, and the terminal post 30 is disposed at the through-hole 2311 and insulated from the housing 20 to enable the housing 20 and the terminal post 30 to be electrically connected to the electrode assembly 10 with opposite polarities. Specifically, one end of the terminal post 30 is located in the housing 20 and connected to the electrode assembly 10, and the other end of the terminal post 30 passes through the through-hole 2311 and protrudes beyond the top wall 231.

In some embodiments, the peripheral side wall 23 further includes a first side wall 233 and a second side wall 234. The first side wall 233 and the second side wall 234 are disposed opposite each other along a third direction Y, where the first direction Z, the second direction X, and the third direction Y are perpendicular to each other. The reinforcement portion 211 protrudes beyond at least one in a group consisting of the top wall 231, the bottom wall 232, the first side wall 233, and the second side wall 234.

Refer to FIG. 2. In some embodiments, the peripheral side wall 23 includes a side wall body 23a and a flange 23b, where the flange 23b is disposed at an end of the peripheral side wall 23 adjacent to the first wall 21. A sealed space accommodating the electrode assembly 10 is formed between the side wall body 23a, the first wall 21, and the second wall 22. The flange 23b protrudes outward from an end of the side wall body 23a adjacent to the first wall 21 in a direction perpendicular to the side wall body 23a. A side surface of the flange 23b facing the first wall 21 is connected to the first wall 21. The reinforcement portion 211 protrudes beyond a side of the flange 23b away from the side wall body 23a, enhancing the structural strength of the peripheral side wall 23 and improving resistance of the peripheral side wall 23 to tensile deformation.

In some embodiments, the peripheral side wall 23 does not include a flange 23b, and an end surface of the side wall body 23a facing the first wall 21 is directly connected to the first wall 21.

In some embodiments, the first wall 21 includes a main body portion 212, where the main body portion 212 is connected to the peripheral side wall 23. Along the first direction Z, a projection of the main body portion 212 overlaps with a projection of the second wall 22, and a projection of an outer contour of the main body portion 212 overlaps with a projection of the peripheral side wall 23. A sealed space accommodating the electrode assembly 10 is formed between the main body portion 212, the second wall 22, and the peripheral side wall 23. The reinforcement portion 211 is connected to the main body portion 212 and integrally formed with the main body portion 212 to further enhance the structural strength of the peripheral side wall 23 and improve the resistance of the peripheral side wall 23 to tensile deformation. Additionally, integrally forming the reinforcement portion 211 with the main body portion 212 facilitates simplifying the manufacturing process of the reinforcement portion 211, reducing production costs.

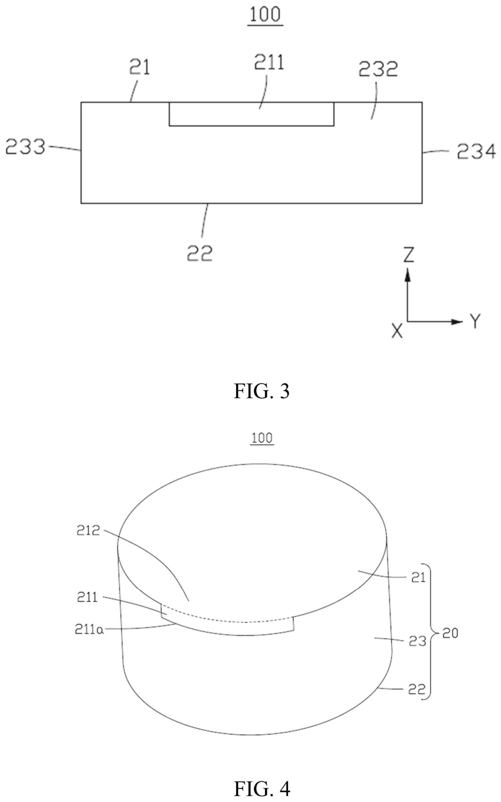

Refer to FIG. 3. In some embodiments, the reinforcement portion 211 is bent toward the peripheral side wall 23 to reduce space wastage caused by the reinforcement portion 211 protruding beyond the peripheral side wall 23, thereby increasing the energy density of the battery 100, while further enhancing the structural strength of the peripheral side wall 23 and improving the resistance of the peripheral side wall 23 to tensile deformation. Optionally, the reinforcement portion 211 is connected to the main body portion 212 and extends along the first direction Z.

In some embodiments, along the first direction Z, a projection of the main body portion 212 is rectangular. The main body portion 212 includes four sides. Optionally, the reinforcement portion 211 is provided on any one side of the main body portion 212, or reinforcement portions 211 are respectively provided on two opposite sides of the main body portion 212, or reinforcement portions 211 are respectively provided on two adjacent sides of the main body portion 212, or reinforcement portions 211 are respectively provided on any three sides of the main body portion 212, or reinforcement portions 211 are respectively provided on all four sides of the main body portion 212.

The reinforcement portion 211 is rectangular, and the reinforcement portion 211 includes a first side 211a, a second side 211b, and a third side 211c. The first side 211a is away from the main body portion 212, and the second side 211b and the third side 211c are between the first side 211a and the main body portion 212 and are disposed opposite each other. An extension direction of the first side 211a is parallel to an extension direction of the side of the main body portion 212 where the reinforcement portion 211 is located, so that the structural strength is uniform throughout the reinforcement portion 211.

Refer to FIG. 4. It can be understood that in other embodiments, along the first direction Z, a projection of the main body portion 212 is circular, and correspondingly, the peripheral side wall 23 is annular. The extension direction of the first side 211a is parallel to the extension direction of the side of the main body portion 212 where the reinforcement portion 211 is located, so that the structural strength is uniform throughout the reinforcement portion 211.

It can be understood that in other embodiments, along the first direction Z, the shape of the projection of the main body portion 212 may alternatively be triangular, polygonal, irregular, or the like; and the shape of the reinforcement portion 211 may alternatively be trapezoidal, semicircular, triangular, or the like.

Refer to FIG. 1 and FIG. 2. In some embodiments, a length of the top wall 231 or the bottom wall 232 in the third direction Y is greater than a length of the first side wall 233 or the second side wall 234 in the second direction X. A length of a side of the main body portion 212 connected to the top wall 231 or the bottom wall 232 is greater than a length of a side of the main body portion 212 connected to the first side wall 233 or the second side wall 234. During battery swelling, the side of the main body portion 212 connected to the top wall 231 or the bottom wall 232 is more prone to stress concentration, leading to bending. The reinforcement portion 211 protrudes beyond the top wall 231 or the bottom wall 232, allowing the reinforcement portion 211 to be connected to a longer side of the main body portion 212, corresponding to a stress concentration area of the main body portion 212. This further reduces the risk that creases form at the edge of the first wall 21 and cause collapse of the corresponding top wall 231 or bottom wall 232, thereby improving the safety performance of the battery 100.

Refer to FIG. 2. In some embodiments, the electrode assembly 10 is a wound structure, where a winding axis direction of the wound structure is the same as the second direction X. The electrode assembly 10 includes a top end surface 11 and a bottom end surface 12, with a straight section 13 and a curved section 14 between the top end surface 11 and the bottom end surface 12. The top end surface 11 and the bottom end surface 12 are disposed opposite each other along the second direction X, with the top end surface 11 close to the top wall 231 and the bottom end surface 12 close to the bottom wall 232. Two curved sections 14 are respectively close to the first side wall 233 and the second side wall 234. The structural strength of the curved section 14 is higher than that of the top end surface 11 and the bottom end surface 12. During battery swelling, the curved section 14 can support the first side wall 233 and the second side wall 234, making the stress on the top wall 231 and the bottom wall 232 more concentrated. Collapse of the top wall 231 and the bottom wall 232 easily leads to compression of the top end surface 11 and the bottom end surface 12, causing a short circuit. The reinforcement portion 211 protruding beyond the top wall 231 or the bottom wall 232 can reduce the risk that creases form at the edge of the first wall 21 and cause collapse of the corresponding top wall 231 or bottom wall 232, thereby improving the safety performance of the battery 100.

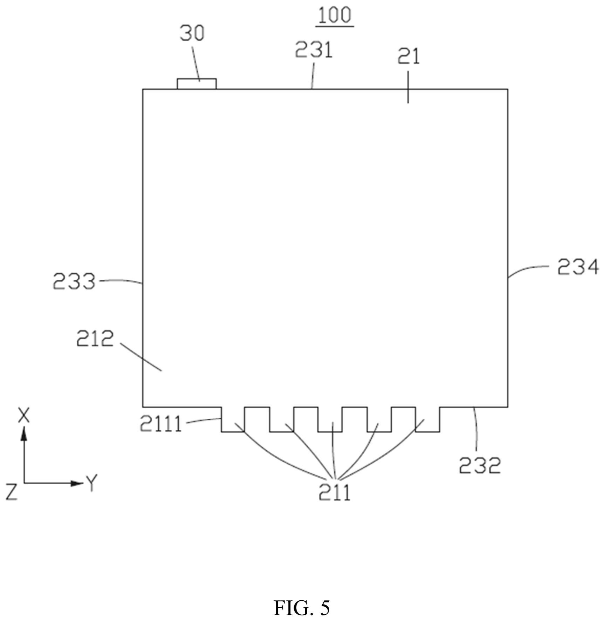

Refer to FIG. 5. In some embodiments, the reinforcement portion 211 includes a plurality of segments 2111 spaced apart along the third direction Y to distribute the force on the reinforcement portion 211, enhancing the structural strength of the reinforcement portion 211.

Optionally, the plurality of segments 2111 are equally spaced along the third direction Y to ensure uniform force distribution across the segments 2111.

It can be understood that in other embodiments, when the reinforcement portion 211 protrudes beyond the first side wall 233 and the second side wall 234, the reinforcement portion 211 includes a plurality of segments 2111 spaced apart along the second direction X to distribute the force on the reinforcement portion 211, enhancing the structural strength of the reinforcement portion 211.

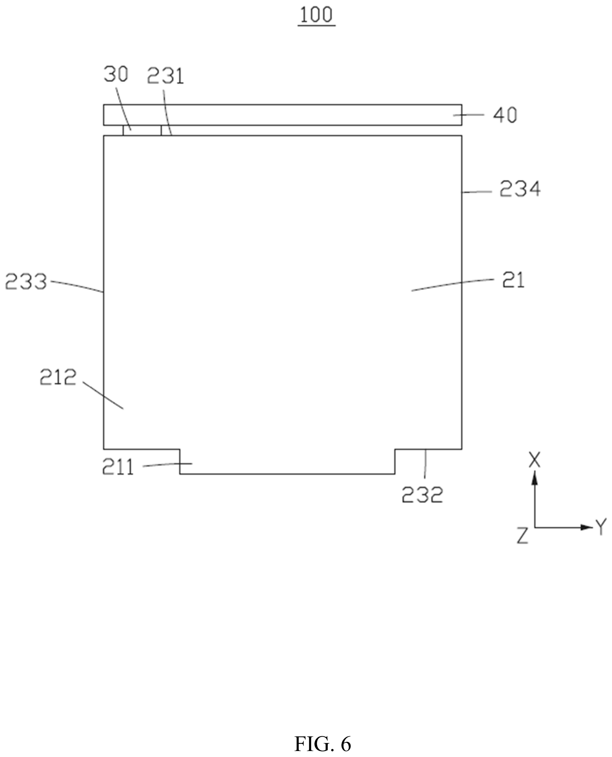

Refer to FIG. 6. In some embodiments, the battery 100 further includes a circuit board assembly 40, where the circuit board assembly 40 is located on a side of the top wall 231. The top wall 231 and the circuit board assembly 40 may be connected and fixed by an adhesive member, with the top wall 231 having higher structural strength than the bottom wall 232 due to the support of the circuit board assembly 40. During battery swelling, the side of the main body portion 212 connected to the bottom wall 232 is prone to pulling the bottom wall 232, causing deformation. This makes the side of the main body portion 212 connected to the bottom wall 232 more susceptible to stress concentration, leading to bending. The reinforcement portion 211 protruding beyond the bottom wall 232 can reduce the risk that creases form at the edge of the first wall 21 and cause collapse of the bottom wall 232, thereby improving the safety performance of the battery 100.

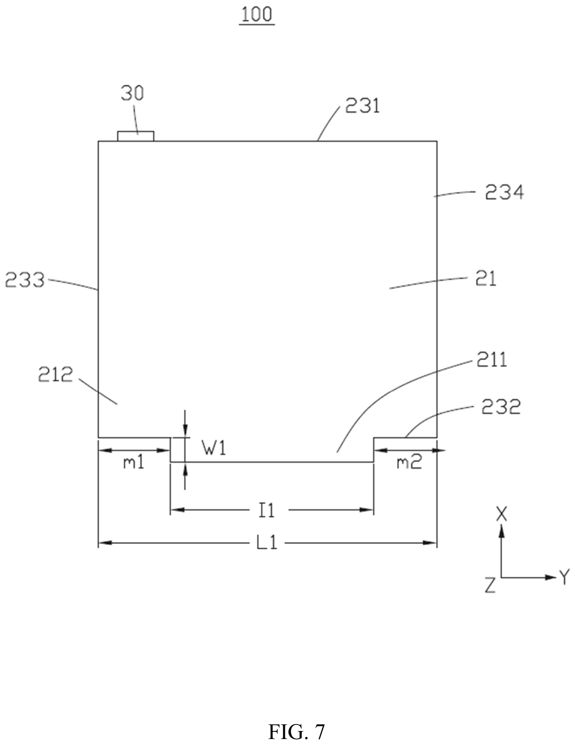

Refer to FIG. 7. In some embodiments, an example in which the reinforcement portion 211 protrudes beyond the bottom wall 232 is used. Along the third direction Y, a length I1 of the reinforcement portion 211 and a length L1 of the bottom wall 232 satisfy: I1 ≥ 10%L1. The length I1 of the reinforcement portion 211 is a length of the side of the reinforcement portion 211 connected to the main body portion 212, and the length L1 of the bottom wall 232 is a length of the side of the main body portion 212 connected to the bottom wall 232. With I1 greater than or equal to 10%L1, during battery swelling, the reinforcement portion 211 can better suppress the formation of creases at the edge of the first wall 21, reduce pulling on the bottom wall 232, and better support the bottom wall 232, enhancing the structural strength of the bottom wall 232, improving the resistance of the bottom wall 232 to tensile deformation, thereby reducing the risk of collapse of the bottom wall 232 and improving the safety performance of the battery. When the reinforcement portion 211 protrudes beyond the top wall 231, the range is also satisfied.

Optionally, I1 may be 10%L1, 15%L1, 20%L1, 25%L1, 30%L1, 35%L1, 40%L1, 45%L1, 50%L1, 55%L1, 60%L1, 65%L1, 70%L1, 75%L1, 80%L1, 85%L1, 90%L1, 95%L1, or 100%L1, or may be in a range defined by any two of the above values.

It should be noted that when the reinforcement portion 211 includes a plurality of segments 2111 spaced apart along the third direction Y, the length I1 of the reinforcement portion 211 is a distance between sides facing away from each other of two outermost segments 2111 in the third direction Y.

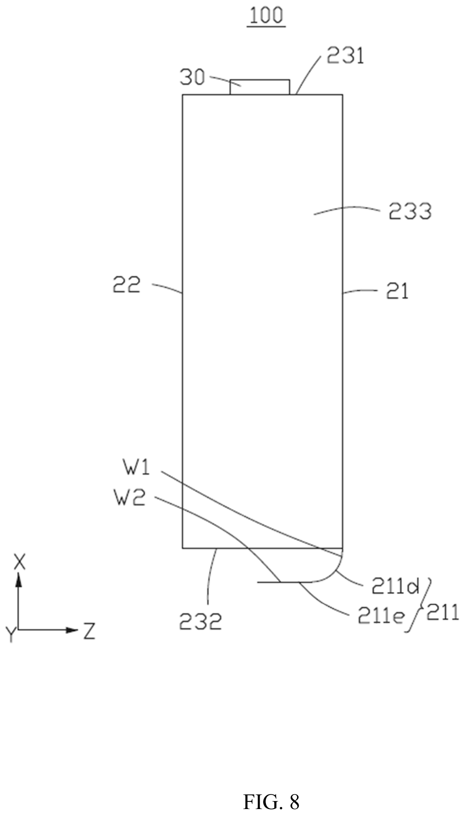

Refer to FIG. 7 and FIG. 8. In some embodiments, along a protrusion direction of the reinforcement portion 211, a protrusion width W1 of the reinforcement portion 211 satisfies: W1 ≥ 0.1 mm. With W1 greater than or equal to 0.1 mm, the structural strength of the reinforcement portion 211 can be enhanced, better suppressing the collapse of the peripheral side wall 23. It should be noted that when the shape of the reinforcement portion 211 is trapezoidal, semicircular, triangular, or the like, a portion satisfying the above range is an effective portion of the reinforcement portion 211.

Specifically, when observed along the third direction Y, in the protrusion direction of the reinforcement portion 211, the reinforcement portion 211 may be divided into a first portion 211d close to the main body portion 212 and extending along the second direction X, and a second portion 211e away from the main body portion 212 and bent, where an extension length w1 of the first portion 211d, a width w2 of the second portion 211e, and the protrusion width W1 satisfy: W1 = w1 + w2. When w2 = 0, it indicates that the reinforcement portion 211 is not bent.

Optionally, W1 may be 0.1 mm, 0.2 mm, 0.3 mm, 0.4 mm, 0.5 mm, 0.6 mm, 0.7 mm, 0.8 mm, 0.9 mm, 1 mm, or any other value within the range greater than or equal to 0.1 mm.

In some embodiments, the protrusion width of the reinforcement portion 211 is less than or equal to a width of the bottom wall 232 in the first direction Z, so that after the reinforcement portion 211 is bent toward the bottom wall 232, along the second direction X, an end of the reinforcement portion 211 away from the main body portion 212 is located within a projection range of the bottom wall 232, reducing space wastage caused by the bent reinforcement portion 211 protruding beyond the second wall 22, thereby increasing the energy density of the battery 100.

Refer to FIG. 7. In some embodiments, for example, the reinforcement portion 211 protrudes beyond the bottom wall 232. Along the third direction Y, a distance m1 between an end of the reinforcement portion 211 close to the first side wall 233 and the first side wall 233 and a distance m2 between an end of the reinforcement portion 211 close to the second side wall 234 and the second side wall 234 satisfy: 0 ≤ m1 ≤ 43%L1, and 0 ≤ m2 ≤ 43%L1. A center of the side of the main body portion 212 of the first wall 21 connected to the bottom wall 232 is prone to creases, making a center of the bottom wall 232 also prone to collapse. With m1 and m2 satisfying 0 ≤ m1 ≤ 43%L1 and 0 ≤ m2 ≤ 43%L1, the reinforcement portion 211 can strengthen the center of the connection between the side of the main body portion 212 of the first wall 21 and the bottom wall 232, which is prone to creases, thereby better suppressing the formation of creases at the edge of the first wall 21 and the collapse of the bottom wall 232, improving the safety performance of the battery. When the reinforcement portion 211 protrudes beyond the top wall 231, the ranges are also satisfied.

Optionally, m1 may be selected from 0, 5%L1, 10%L1, 15%L1, 20%L1, 25%L1, 30%L1, 35%L1, 40%L1, 41%L1, 42%L1, or 43%L1, or from a range defined by any two of the above values; and m2 may be selected from 0, 5%L1, 10%L1, 15%L1, 20%L1, 25%L1, 30%L1, 35%L1, 40%L1, 41%L1, 42%L1, or 43%L1, or from a range defined by any two of the above values.

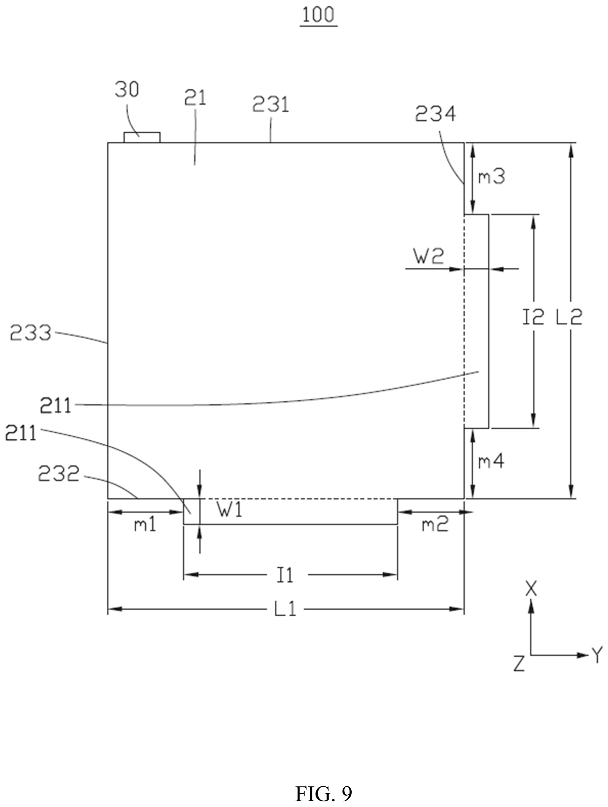

In some embodiments, m1 = m2, and a position of the reinforcement portion 211 corresponds to a position of the first wall prone to creases, ensuring uniform force distribution on the reinforcement portion 211. Refer to FIG. 9. In some embodiments, the electrode assembly 10 is a stacked structure, where a stacking direction of the stacked structure is the same as the first direction Z, and all sides of the electrode assembly 10 are prone to bending. Two reinforcement portions 211 are provided, with one protruding beyond the top wall 231 or the bottom wall 232, and the other protruding beyond the first side wall 233 or the second side wall 234. A dimension and positional relationship of the reinforcement portion 211 protruding beyond the top wall 231 or the bottom wall 232 are the same as those in the above embodiments. The dimension and positional relationship of the reinforcement portion 211 protruding beyond the first side wall 233 or the second side wall 234 are similar to those in the above embodiments. The details are as follows.

For example, the reinforcement portion 211 protrudes beyond the second side wall 234. Along the second direction X, a length I2 of the reinforcement portion 211 and a length L2 of the second side wall 234 satisfy: I2 ≥ 10%L2. The length I2 of the reinforcement portion 211 is a length of a side of the reinforcement portion 211 connected to the main body portion 212, and the length L2 of the second side wall 234 is a length of a side of the main body portion 212 connected to the second side wall 234. With I2 greater than or equal to 10%L2, during battery swelling, the reinforcement portion 211 can better suppress the formation of creases at the edge of the first wall 21, reduce pulling on the second side wall 234, and better support the second side wall 234, enhancing the structural strength of the second side wall 234, improving resistance of the second side wall 234 to tensile deformation, thereby reducing the risk of collapse of the second side wall 234 and improving the safety performance of the battery. When the reinforcement portion 211 protrudes beyond the first side wall 233, the range is also satisfied.

Along the protrusion direction of the reinforcement portion 211, a protrusion width W2 of the reinforcement portion 211 satisfies: W2 ≥ 0.1 mm. Specifically, in the protrusion direction of the reinforcement portion 211, the reinforcement portion 211 may be divided into a first portion 211d close to the main body portion 212 and extending along the third direction Y, and a second portion 211e away from the main body portion 212 and bent, where an extension length w3 of the first portion 211d, an extension length w4 of the second portion 211e, and the protrusion width W2 satisfy: W2 = w3 + w4. When w4 = 0, it indicates that the reinforcement portion 211 is not bent.

For example, the reinforcement portion 211 protrudes beyond the second side wall 234. Along the second direction X, a third distance m3 between an end of the reinforcement portion 211 facing the top wall 231 and the top wall 231 and a fourth distance m4 between an end of the reinforcement portion 211 facing the bottom wall 232 and the bottom wall 232 satisfy: 0 ≤ m3 ≤ 43%L2, and 0 ≤ m4 ≤ 43%L2. With m3 and m4 satisfying 0 ≤ m3 ≤ 43%L2 and 0 ≤ m4 ≤ 43%L2, the reinforcement portion 211 can strengthen the center of the connection between the main body portion 212 of the first wall 21 and the second side wall 234, which is prone to creases, thereby better suppressing the formation of creases at the edge of the first wall 21 and the collapse of the second side wall 234, improving the safety performance of the battery. When the reinforcement portion 211 protrudes beyond the first side wall 233, the ranges are also satisfied.

In some embodiments, m3 = m4, and the position of the reinforcement portion 211 corresponds to the position of the first wall prone to creases, ensuring uniform force distribution on the reinforcement portion 211.

The following describes this application through specific examples.

The batteries of comparative examples and examples were subjected to a hot box test. The batteries were first left at room temperature, and then placed in a hot box, where the temperature was raised to 130°C ± 2°C at a rate of 5°C ± 2°C and maintained at 130°C ± 2°C for 1 h. After the test, the housing of the battery was observed for creases or collapse.

Table 1 provides Comparative example 1 and Examples 1 to 8, where the battery thickness was 4.5 mm, and the battery was provided with a wound electrode assembly with a winding axis direction being a direction in which the bottom wall 232 and the top wall 231 were opposite each other. In the table, L1 corresponded to the length of the bottom wall 232 of the battery, and a circuit board assembly 40 was welded to the side where the top wall 231 was located. The wound electrode assembly was formed by sequentially stacking and winding a positive electrode plate, a separator, and a negative electrode plate, with the separator disposed between the positive electrode plate and the negative electrode plate. In Comparative example 1, the battery did not include the reinforcement portion 211. In Examples 1 to 8, each battery included one reinforcement portion 211, and the reinforcement portion 211 protruded beyond the bottom wall 232 (refer to FIG. 7). It should be noted that in Examples 4 and 5, the reinforcement portion 211 of the battery included a plurality of segments 2111, with the segments equally spaced along the third direction Y. The length I1 of the reinforcement portion 211 was the distance between sides facing away from each other of two outermost segments 2111 in the third direction Y. In Example 4, each segment had a length of 4 mm, with a distance of 1 mm between the segments. In Example 5, each segment had a length of 6 mm, with a distance of 1 mm between the segments.

All parameters other than those specified in Table 1 are the same for each Example and Comparative example.

**Table 1 Remaining parameters and test results for batteries in Comparative example 1 and Examples 1 to 8**

| | I1 (mm) | L1 (mm) | ml (mm) | m1/L1 | m2 (mm) | m2/L1 | w1 (mm) | w2 (mm) | w1 (mm) | Number of segments | Crease depth (mm) | Collapse |
|---|---|---|---|---|---|---|---|---|---|---|---|---|
| Comparative example 1 | | 30 | | | | | | | | | 2.35 | Yes |
| Example 1 | 17 | 30 | 6.5 | 21.67% | 6.5 | 21.67% | 0.45 | 0 | 0.45 | None | 0 | No |
| Example 2 | 17 | 30 | 5 | 16.67% | 7 | 23.34% | 0.45 | 0 | 0.45 | None | 0 | No |
| Example 3 | 8 | 30 | 12 | 40% | 10 | 33.34% | 0.45 | 0 | 0.45 | None | 0 | No |
| Example 4 | 25 | 30 | 2.5 | 8.33% | 2.5 | 8.33% | 0.45 | 0 | 0.45 | 5 | 0 | No |
| Example 5 | 20 | 30 | 2 | 6.67% | 8 | 26.67% | 0.45 | 0 | 0.45 | 3 | 0 | No |
| Example 6 | 17 | 30 | 6.5 | 21.67% | 6.5 | 21.67% | 0.15 | 0.3 | 0.45 | None | 0 | No |
| Example 7 | 17 | 30 | 6.5 | 21.67% | 6.5 | 21.67% | 0.21 | 0.24 | 0.45 | None | 0 | No |
| Example 8 | 8 | 30 | 10 | 33.34% | 12 | 40% | 0.21 | 0.24 | 0.45 | None | 0 | No |

From Table 1, it can be learned that the reinforcement portion 211 can reduce the risk that creases form at the edge of the first wall 21 and cause collapse of the bottom wall 232 during battery swelling, improving the safety performance of the battery 100.

Table 2 provides Comparative example 2 and Example 9, where the battery thickness was 4.3 mm, and the battery was provided with a stacked electrode assembly formed by alternately stacking a positive electrode plate, a separator, and a negative electrode plate, with the separator disposed between the positive electrode plate and the negative electrode plate. The lengths corresponding to the top wall 231 and the bottom wall 232 were L1, and the lengths corresponding to the first side wall 233 and the second side wall 234 were L2. In Comparative example 2, the battery did not include a reinforcement portion 211. In Example 9, the battery included four reinforcement portions 211, with one protruding beyond the top wall 231, one protruding beyond the bottom wall 232, one protruding beyond the first side wall 233, and one protruding beyond the second side wall 234. FIG. 9 illustrates an example in which the reinforcement portion 211 protrudes beyond the bottom wall 232 and the second side wall 234. The case where the reinforcement portion 211 protrudes beyond the top wall 231 is the same as the case where the reinforcement portion 211 protrudes beyond the bottom wall 232, and the case where the reinforcement portion 211 protrudes beyond the first side wall 233 is the same as the case where the reinforcement portion 211 protrudes beyond the second side wall 234.

All parameters other than those specified in Table 2 are the same for each Example and Comparative example.

**Table 2 Remaining parameters and test results for batteries in Comparative example 2 and Example 9**

| | I1 | L1 | I2 | L2 | m1 | m2 | m3 | m4 | w1 | w2 | w1 | w3 | w4 | W2 | Number of segments | | Crease depth (mm) | | Collapse | |
|---|---|---|---|---|---|---|---|---|---|---|---|---|---|---|---|---|---|---|---|---|
| | (mm) | | | | | | | | | | | | | | Top/Bottom wall | First/Second side wall | Top/Bottom wall | First/Second side wall | Top/Bottom wall | First/Second side wall |
| Comparative example 2 | | 30 | | 26 | | | | | | | | | | | | | 3.67 | 0.19 | Yes | Yes |
| Example 9 | 17 | 30 | 18 | 26 | 6.5 | 6.5 | 4 | 4 | 0.5 | 0 | 0.5 | 0.5 | 0 | 0.5 | None | None | 0 | 0 | No | No |

From Table 2, it can be learned that the reinforcement portion 211 can reduce the risk that creases form at the edge of the first wall 21 and cause collapse of the top wall 231, bottom wall 232, first side wall 233, and second side wall 234 during battery swelling, improving the safety performance of the battery 100.

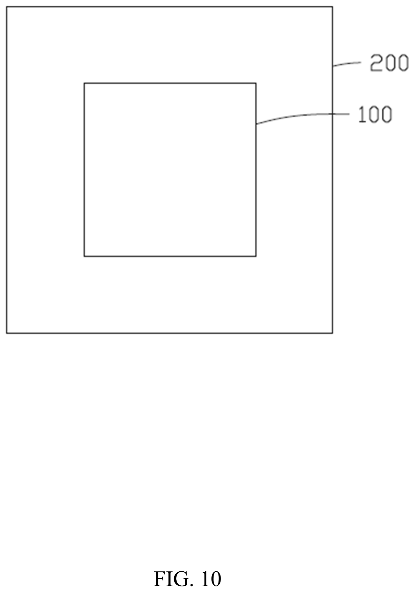

Refer to FIG. 10. An embodiment of this application further provides an electric device 200, where the electric device 200 includes any one of the batteries 100 described in the above embodiments. The electric device 200 may include, but is not limited to, electronic devices such as mobile phones, tablet computers, and drones.

In summary, in the above battery 100 and electric device 200, the reinforcement portion 211 protrudes beyond the peripheral side wall 23. During battery swelling, the reinforcement portion 211 can suppress the formation of creases at the edge of the first wall 21, reduce pulling on the peripheral side wall 23, and provide support to the peripheral side wall 23, enhancing the structural strength of the peripheral side wall 23, improving the resistance of the peripheral side wall 23 to tensile deformation, thereby reducing the risk of collapse of the peripheral side wall 23 and improving the safety performance of the battery 100.

Additionally, those skilled in the art may make other changes within the spirit of this application, and such changes made in accordance with the spirit of this application should be included within the scope disclosed by this application.

## Claims

1. A battery, comprising an electrode assembly, a housing, and a terminal post, wherein the electrode assembly is accommodated in the housing, wherein
the housing comprises a first wall and a second wall disposed opposite each other along a first direction and comprises a peripheral side wall surrounding the first wall and the second wall and disposed therebetween, and the first direction is a thickness direction of the battery;
the first wall comprises a reinforcement portion, wherein the reinforcement portion protrudes beyond the peripheral side wall; and
the peripheral side wall comprises a top wall and a bottom wall disposed opposite each other along a second direction, wherein the top wall is provided with a through-hole, and the terminal post is disposed at the through-hole.

2. The battery according to claim 1, wherein the battery satisfies at least one of the following:
a. the first wall and the peripheral side wall are connected by welding; or
b. the housing contains a metal element, wherein the metal element comprises at least one of Mg, Al, Zn, Fe, Sn, Cu, Ag, Pt, Au, or Mn.

3. The battery according to claim 1, wherein the peripheral side wall comprises a side wall body and a flange, wherein the flange is disposed at an end of the peripheral side wall adjacent to the first wall, a side surface of the flange is connected to the first wall, and the reinforcement portion protrudes beyond a side of the flange away from the side wall body.

4. The battery according to claim 1, wherein the battery satisfies at least one of the following:
c. the reinforcement portion is bent toward the peripheral side wall; or
d. the first wall comprises a main body portion, wherein the main body portion is connected to the peripheral side wall, and the main body portion and the reinforcement portion are integrally formed.

5. The battery according to claim 1, wherein the peripheral side wall further comprises a first side wall and a second side wall disposed opposite each other along a third direction; the first direction, the second direction, and the third direction are perpendicular to each other; and the reinforcement portion protrudes beyond at least one in a group consisting of the top wall, the bottom wall, the first side wall, and the second side wall.

6. The battery according to claim 5, wherein the electrode assembly satisfies at least one of the following:
e. a length of the top wall or the bottom wall in the third direction is greater than a length of the first side wall or the second side wall in the second direction, and the reinforcement portion protrudes beyond the top wall or the bottom wall; or
f. the electrode assembly is a wound structure, a winding axis direction of the wound structure is the same as the second direction, and the reinforcement portion protrudes beyond the top wall or the bottom wall.

7. The battery according to claim 5, wherein the reinforcement portion comprises a plurality of segments spaced apart along the second direction or the third direction.

8. The battery according to claim 5, wherein the battery further comprises a circuit board assembly, the circuit board assembly is located on a side of the top wall, and the reinforcement portion protrudes beyond the bottom wall.

9. The battery according to claim 5, wherein the battery satisfies at least one of the following:
g. the reinforcement portion protrudes beyond the top wall or the bottom wall, and along the third direction, a length I1 of the reinforcement portion and a length L1 of the top wall or the bottom wall satisfy: I1 ≥ 10%L1; or
h. the reinforcement portion protrudes beyond the first side wall or the second side wall, and along the second direction, a length I2 of the reinforcement portion and a length L2 of the first side wall or the second side wall satisfy: I2 ≥ 10%L2.

10. The battery according to claim 5, wherein along a protrusion direction of the reinforcement portion, a protrusion width W1 of the reinforcement portion satisfies: W1 ≥ 0.1 mm.

11. The battery according to claim 5, wherein the battery satisfies at least one of the following:
i. the reinforcement portion protrudes beyond the top wall or the bottom wall; and along the third direction, a length L1 of the top wall or the bottom wall, a distance m1 between an end of the reinforcement portion close to the first side wall and the first side wall, and a distance m2 between an end of the reinforcement portion close to the second side wall and the second side wall satisfy: 0 ≤ m1 ≤ 43%L1, and 0 ≤ m2 ≤ 43%L1; or
j. the reinforcement portion protrudes beyond the first side wall or the second side wall; and along the second direction, a length L2 of the first side wall or the second side wall, a distance m3 between an end of the reinforcement portion facing the top wall and the top wall, and a distance m4 between an end of the reinforcement portion facing the bottom wall and the bottom wall satisfy: 0 ≤ m3 ≤ 43%L2, and 0 ≤ m4 ≤ 43%L2.

12. An electric device, wherein the electric device comprises the battery according to any one of claims 1 to 11.
